# EUROPEAN PATENT SPECIFICATION

(11) **EP 4 296 417 B1**
(45) Date of publication and mention of the grant of the patent: **26.08.2026**
(21) Application number: 22756062.0
(22) Date of filing: 09.02.2022
(51) Int. Cl.: D04H 3/147, C08L 101/00, C08L 101/16, D01F 6/92, D01F 8/14, D04H 1/4326, D04H 1/435, D04H 1/4382, D04H 1/558, D04H 3/011, D04H 3/14, D04H 3/009

(54) **BIODEGRADABLE NON-WOVEN FABRIC AND METHOD FOR PRODUCING MOLDED BODY**
BIOLOGISCH ABBAUBARER VLIESSTOFF UND VERFAHREN ZUR HERSTELLUNG EINES FORMKÖRPERS
NON-TISSÉ BIODÉGRADABLE ET PROCÉDÉ DE PRODUCTION D'UN CORPS MOULÉ

(30) Priority: 17.02.2021 JP 2021023167
(43) Date of publication of application: 27.12.2023
(73) Proprietor: Mitsui Chemicals Asahi Life Materials Co., Ltd., Tokyo 104-0028 (JP)
(72) Inventor: FUJIMOTO, Yuya, Tokyo 100-0006 (JP); KOMATSU, Takashi, Tokyo 100-0006 (JP); SHIOTA, Eiji, Tokyo 100-0006 (JP)
(74) Representative: dompatent
(86) International application number: PCT/JP2022/005162
(87) International publication number: WO 2022/176741

(56) References cited:
- WO-A1-2009/024837
- WO-A1-2018/070490
- JP-A- 2003 326 594
- JP-A- 2011 157 660
- JP-A- 2011 157 660
- JP-A- 2013 104 153
- JP-A- 2013 104 153
- JP-A- 2018 204 168
- JP-A- 2018 204 168
- JP-A- 2019 071 962
- JP-A- 2019 071 962
- JP-A- 2019 073 809
- JP-A- H07 304 939
- PATLAN RICHARD ET AL: "Fabrication and Characterization of Poly(L-lactic Acid) Fiber Mats Using Centrifugal Spinning", FIBERS AND POLYMERS, THE KOREAN FIBER SOCIETY, SEOUL, vol. 19, no. 6, 6 July 2018 (2018-07-06), pages 1271 - 1277, XP036541849, ISSN: 1229-9197, [retrieved on 20180706], DOI: 10.1007/S12221-018-7063-0

## Description

### FIELD

The present invention relates to a biodegradable nonwoven fabric **and a method for producing a molded body using said fabric.**

### BACKGROUND

Molded bodies obtained by hot molding of biodegradable nonwoven fabrics are known in the prior art and are used in a variety of fields for an increasingly wide range of purposes. For thermoforming of biodegradable nonwoven fabrics, however, it is difficult to obtain molded bodies without tearing and with few stretch marks while cleanly following the forms of molding dies, and to obtain satisfactory dimensional stability for molded bodies.

Reference 1 and Reference 2 disclose biodegradable molding nonwoven fabrics comprising polylactic acid or polybutylene succinate.

PTL 3 discloses a biodegradable nonwoven fabric made from filaments, that comprises a polylactic acid-based polymer and an aliphatic polyester copolymer. In PTL 3, a moldable nonwoven fabric is obtained with improved thermal bonding properties by creating sea-island composite filaments wherein the polylactic acid-based polymer forms the sea portions and the aliphatic polyester copolymer forms the island portions, the aliphatic polyester copolymer forming the island portions being exposed on the fiber surfaces.
**PTL 4 aims to provide a nonwoven fabric capable of simply and efficiently absorbing and reducing a basic malodorous substance, specifically, a basic malodorous substance such as trimethylamine and ammonia which are generated from sweat, raw garbage and the like.**
**PTL 5 aims to provide a biodegradable beverage-extraction container having excellent shape stability under thermal environment and excellent beverage extraction properties.**
**PTL 6 is directed towards the provision of a biodegradable filament nonwoven fabric having high elongation degree, excellent fluff prevention property and good forming characteristics.**

### [CITATION LIST]

### [PATENT LITERATURE]

[PTL 1] Japanese Unexamined Patent Publication HEI No. 9-95848
[PTL 2] Japanese Unexamined Patent Publication No. 2000-136478
[PTL 3] International Patent Publication No. 2018/070490
**[PTL 4]** JP 2013 104153 A
**[PTL 5]** JP 2019 071962 A
**[PTL 6]** JP 2011 157660 A

### SUMMARY

### [TECHNICAL PROBLEM]

However, since the biodegradable molding nonwoven fabrics described in PTLs 1 and 2 are formed by partially thermocompression bonding together the constituent fibers, the bonding between fibers is too strong making it difficult to accomplish hot molding without tearing, and this makes it difficult to obtain a molded body having a large molding depth.

With the nonwoven fabric described in PTL 3 it is possible to more rapidly obtain a molded body having a proper form that follows the molding die, and without tearing and with few stretch marks during thermoforming, but there is a need for molded bodies with higher dimensional stability suited for specialized purposes.

In light of these problems of the prior art, the problem to be solved by the invention is to provide a biodegradable nonwoven fabric that, while being biodegradable, exhibits excellent uniform moldability and formability (to obtain a molded body with low breakage, fluff, stretch marks and a proper form in a shorter period of time), and that has satisfactory dimensional stability after molding, as well as a method for producing the molded body.

### [SOLUTION TO PROBLEM]

As a result of diligent research conducted to solve the aforementioned problems, the present inventors have completed this invention after focusing on the properties of nonwoven fabrics before molding and finding that if it is composed of fibers including a biodegradable thermoplastic resin, the basis weight of the nonwoven fabric is in the range of 10 g/m² to 450 g/m², the difference between the principal melting point and the crystallization onset temperature of the nonwoven fabric is 91°C or more and the cold crystallization enthalpy heat ΔH of the nonwoven fabric is 1.0 J/g or greater, then the resulting uniform moldability and formability are excellent and the dimensional stability after molding is satisfactory.

Specifically, the present invention **is evident from the appended set of claims.**

### [ADVANTAGEOUS EFFECTS OF INVENTION]

The biodegradable nonwoven fabric of the invention is biodegradable while also exhibiting excellent uniform moldability and formability (to obtain a molded body with low breakage, fluff, stretch marks and a proper form in a shorter period of time), and having highly satisfactory dimensional stability for molded bodies.

### DESCRIPTION OF EMBODIMENTS

An embodiment of the invention will now be described in detail.

The biodegradable nonwoven fabric of the embodiment is a nonwoven fabric composed of fibers that include a biodegradable thermoplastic resin, wherein the basis weight is 10 g/m² **or more** to 450 g/m²**or less,** the difference between the melting point and the crystallization onset temperature of the nonwoven fabric is **from** at least 91°C **to 159 °C or less,** and the cold crystallization enthalpy heat ΔH of the nonwoven fabric is **from** 1.0 J/g or greater **to 20.0 J/g or lower.**

The biodegradable nonwoven fabric of the embodiment is made of fibers that include a biodegradable thermoplastic resin (hereunder also referred to as "main component resin"). Biodegradable thermoplastic resins include polylactic acid (PLA)-based polymers, polyhydroxyalkanoic acids, polyhydroxybutyrate valerate, polyhydroxy butyrate hexanoate, nylon 4, polycaprolactone, polybutylene succinate (PBS), polybutylene succinate adipate, polybutylene terephthalate succinate, polybutylene succinate carbonate, polybutylene adipate terephthalate, polyethylene succinate, polyethylene terephthalate succinate, polyglycolic acid and polyvinyl alcohol. **In the claimed invention, the biodegradable thermoplastic resin is a polylactic acid-based polymer.** A polylactic acid-based polymer is preferred from the viewpoint of spinnability and molding processability.

The polylactic acid-based polymer (hereunder also referred to as "PLA") may be a polymer selected from the group consisting of D-lactic acid polymers, L-lactic acid polymers, copolymers of D-lactic acid and L-lactic acid, copolymers of D-lactic acid and hydroxycarboxylic acid, copolymers of L-lactic acid and hydroxycarboxylic acid, and copolymers of D-lactic acid, L-lactic acid and hydroxycarboxylic acid, or blends of two or more of these polymers. The D/L ratio of the polylactic acid polymer can be set within a range that does not interfere with the spinnability and nonwoven fabric properties, but the proportion of the D-form of the total polylactic acid weight is preferably 0 to 15%, more preferably 0.1 to 10% and even more preferably 0.1 to 6%. If the proportion of the D-form is within this range it will be possible to stably obtain a nonwoven fabric with satisfactory spinnability, and to obtain a nonwoven fabric with desired properties while maintaining the melting point and crystallinity in a suitable range.

The melt flow rate (MFR) of the polylactic acid-based polymer is preferably 20 to 120 g/10 min and more preferably 30 to 70 g/10 min at 210°C. If the MFR is 20 g/10 min or greater at 210°C, the melt viscosity will be suitable and the fibers will be more likely to be thinned out during the spinning step, resulting in satisfactory spinnability. If the MFR is 120 g/10 min or lower at 210°C, the melt viscosity will be suitable, resulting in less monofilament breakage during the spinning step, and thus more satisfactory spinnability.

The method for producing the biodegradable nonwoven fabric of the embodiment is not particularly restricted, and a publicly known spunbond method, melt blowing method, airlaid method, carding method or papermaking method may be used. The biodegradable nonwoven fabric is preferably integrated by bonding, the method of bonding being optionally embossing, thermal bonding, columnar flow entanglement, mechanical tangling or needle punching. A nonwoven fabric made from long filaments is preferred, preferably being produced by a spunbond method, to allow more efficient production and to help inhibit napping after molding.

When a spunbond method is used, the resin is hot melted and discharged from a spinning nozzle, and the resulting spun yarn is cooled using a publicly known cooling device and subjected to tow thinning with a suction device such as an air sucker. The yarn group discharged from the suction device is then opened and accumulated on a conveyor to form a web. A partial thermocompression bonding apparatus such as a heated embossing roll is then used for partial thermocompression bonding of the web formed on the conveyor, to obtain a spunbond nonwoven fabric. A nonwoven fabric obtained by a spunbond method has high fabric strength and no loss of the staple fibers due to breakage during bonding, while also having low-cost productivity.

The biodegradable nonwoven fabric of the embodiment may be layered with another nonwoven fabric, as one layer in a multilayer layered nonwoven fabric such as SS, SMS, SMMS or SMSM, for example. Here, "S" represents a long filament nonwoven fabric obtained by a spunbond method, and "M" represents a superfine nonwoven fabric obtained by a melt-blown method. The biodegradable nonwoven fabric may also be used as a base material for layering of a staple fiber nonwoven fabric layer.

The shapes of the fibers forming the biodegradable nonwoven fabric of the embodiment are not restricted, and the fibers may have cross-sections that are round, flat or non-regular such as C-shaped, Y-shaped or V-shaped, with round cross-sections being preferred, and with a sea-island structure, core-sheath structure or split fiber structure being more preferred.

The fibers forming the biodegradable nonwoven fabric of the embodiment may comprise one or more components such as another resin, a copolymer other than an aliphatic polyester copolymer, or a flame retardant, inorganic filler, flexibilizer, plasticizer, pigment or antistatic agent, depending on the purpose.

The basis weight of the biodegradable nonwoven fabric of the embodiment is 10 g/m² **or more** to 450 g/m² **or less,** preferably 20 to 400 g/m² and more preferably 20 to 250 g/m². A basis weight of 10 g/m² or greater will provide sufficient strength, while 450 g/m² or lower will allow sufficient heat transfer to the nonwoven fabric during molding, helping to obtain a molded body with high dimensional stability.

In the biodegradable nonwoven fabric of the embodiment, the difference between the melting point of the nonwoven fabric and the crystallization onset temperature of the nonwoven fabric is a difference of **from** at least 91°C **to 159 °C or less.** The difference between the melting point of the nonwoven fabric and the crystallization onset temperature of the nonwoven fabric is preferably at least 95°C and more preferably at least 103°C. If the temperature difference is less than 91°C, crystallization may not proceed sufficiently even if the temperature
is increased during molding, and therefore a molded body with high dimensional stability may not be obtained.

The cold crystallization enthalpy heat ΔH of the biodegradable nonwoven fabric of the embodiment is 1.0 J/g or greater, preferably 1.2 J/g or greater, more preferably 3.3 J/g or greater and even more preferably 8.6 J/g. If the cold crystallization enthalpy heat ΔH is 1.0 J/g or greater, crystallization will proceed sufficiently during the molding process, helping to obtain a molded article with high dimensional stability. From the viewpoint of obtaining a molded body with high dimensional stability and low amorphous content after molding, the cold crystallization enthalpy heat is 20.0 J/g or lower, more preferably 17.5 J/g or lower and even more preferably 15.0 or lower.

To obtain a difference of at least 91°C between the melting point and the crystallization onset temperature of the nonwoven fabric, specifically, adjustments may be made, such as changing the type of biodegradable thermoplastic resin, the manner of mixing of the thermoplastic resin as the secondary component (the type of thermoplastic resin as the secondary component and the mixing ratio with the main component resin), the spinning conditions (resin temperature, throughput, yarn traction and cooling), the thermocompression bonding conditions (roll temperature, pressure, speed and embossing pattern), the fixed length heat setting conditions and the aging conditions (such as the storage conditions). Details in regard to the conditions are explained below. The same applies for the method of obtaining a cold crystallization peak enthalpy heat ΔH of 1.0 J/g or greater for the nonwoven fabric.

The biodegradable nonwoven fabric of the embodiment has a dimensional change rate in the MD direction of preferably less than -4.0%, more preferably -4.5% or lower and even more preferably -5.0% or lower, based on thermomechanical analysis at 80°C to 140°C. That the dimensional change rate of the nonwoven fabric is low, i.e. the nonwoven fabric tends to contract, means that it has an adequate amorphous content, while a dimensional change rate of less than -4.0% can promote crystallization due to the heat and stretching during hot molding, to increase the moldability and dimensional stability of the molded article.

### [Mixing of thermoplastic resin as secondary component]

The fibers in the biodegradable nonwoven fabric of the embodiment include a thermoplastic resin as a secondary component (hereunder also referred to as "secondary component resin"), in addition to the biodegradable thermoplastic resin. The secondary component resin content is **0.5 wt% or more to 30 wt% or less,** even more preferably 3 to 27 wt% and most preferably 5 to 25 wt%, where the
total amount of the resins is 100 wt%. If the addition amount is 0.5 wt% or greater it will be possible to lower the crystallization onset temperature of the nonwoven fabric, allowing crystallization to proceed at a lower temperature during molding. If the amount of addition is 30 wt% or lower, crystallization will proceed sufficiently during molding without crystallization being inhibited.

**In the present technology in general, t**he secondary component resin is an aliphatic ester, an aromatic ester or a homopolymer or copolymer of one or more monomers selected from the grou p consisting of (meth)acrylic acid-based monomers, olefins, caprolactones, hydroxyalkanoates, a lkylene glycols, dibasic acids and dialcohols. A plurality of these individual biodegradable poly mers may also be selected and
blended together. From the viewpoint of the compatibility and spinnability of the biodegradable thermoplastic resin, it is preferred to use an aliphatic ester or aromatic ester, and specifically polybutylene succinate, polybutylene adipate terephthalate or polybutylene succinate adipate. **In the claimed invention, the secondary component includes any one of polybutylene succinate, polybutylene adipate terephthalate or polybutylene succinate adipate.**

The MFR of the secondary component resin is preferably 100 g/10 min or lower, more preferably 20 to 80 g/10 min and even more preferably 30 to 70 g/10 min, for satisfactory stretchability during the spinning step. The melt flow ratio of the main component resin and the secondary component resin is preferably such that 0.2 ≤ [melt flow rate of secondary component resin/melt flow rate of main component resin] ≤ 1.5, and is more preferably 0.3 to 1.4. If the melt flow ratio is within this range, the spinnability will be satisfactory and dispersibility of the secondary component resin will also be satisfactory, allowing a more stable thermal bonding property to be obtained.

The fibers composing the biodegradable nonwoven fabric of the embodiment are preferably sea-island fibers with the main component resin as the sea and the secondary component resin as the islands, because the effect of lowering the crystallization onset temperature will be more significant. **In the claimed invention, the fibers that include the biodegradable thermoplastic resin are sea-island fibers wherein the main component constitutes the sea portions and the secondary component constitutes the island portions.**

### [Yarn traction during spinning]

In a spunbond method it is common to use a high-speed airflow traction device with an air jet, allowing the traction to be adjusted by the volume of air introduced into the traction device. The traction was measured by loading two lines (fishing lines) with diameters of 0.235 mm and the same lengths as the full length of the traction device (for the purpose of the invention, a "Ginrin (No. 2/natural/50 m roll, single)" nylon line by Toray Co., Ltd. was used) into the traction device, measuring the stress on the lines from the connected spring end, and calculating the traction (mN/m) by dividing by the loaded line length. The traction is preferably 82 to 125 mN/m, more preferably 82 to 105 mN/m and most preferably 87 to 100 mN/m. By appropriately controlling the traction in this range it is easier to adjust the crystallization onset temperature and cold crystallization peak to within the proper ranges, and to help reduce contraction by preheating during molding, while also exhibiting adequate stretchability.

### [Thermocompression bonding conditions]

When thermocompression bonding is carried out for production of the biodegradable nonwoven fabric of the embodiment, a pair of embossing rolls having a concavoconvex pattern on at least one surface are used for thermocompression bonding at a roll temperature of preferably 25 to 85°C and more preferably 40 to 70°C, a linear pressure of preferably 8 to 100 N/mm and more preferably 20 to 70 N/mm, and a contact bonding area ratio of preferably 4 to 50% and more preferably 8 to 40%. Carrying out thermocompression bonding in a suitable range results in a nonwoven fabric that has no slipping of the adhesive during molding and can promote rapid crystallization by heating to produce a molded body with satisfactory dimensional stability.

### [Fixed length heat setting conditions]

Fixed length heat setting may be carried out after embossing for production of the biodegradable nonwoven fabric of the embodiment. Preferably, the spun nonwoven fabric web is immediately subjected to thermocompression bonding, after which heat is applied under tensile force to obtain a heat-extendable nonwoven fabric that has a good surface property and allows the obtained molded body to have with a proper form and release during molding. The method for fixed length heat setting may be a common method such as hot air drying, pin tenter drying, hot plate treatment, calendering, felt calendering, air-through processing or hot pressing. The temperature range for fixed length heat setting is not particularly restricted so long as the resin forming the nonwoven fabric does not adhere to the apparatus and the fibers of the nonwoven fabric can appropriately bond, but it is preferably 50°C to 95°C, more preferably 70°C to 90°C and even more preferably 70°C to 80°C. A temperature of 95°C or lower for fixed length heat setting can appropriately reduce oriented crystallization of the nonwoven fabric and lower the crystallization onset temperature, and can increase the cold crystallization peak enthalpy heat ΔH. A fixed length heat setting temperature of 50°C or higher will allow an adequate effect to be obtained by the fixed length heat setting.

### [Aging]

With specific aging conditions, the biodegradable nonwoven fabric of the embodiment can have a lower crystallization onset temperature and inhibited heat shrinkage during molding (especially during the preheating step). Specifically, the effect described above can be obtained more easily with aging conditions by storage for 10 days or longer in a 40°C atmosphere.

A molded body comprising a hot molded biodegradable nonwoven fabric of the embodiment will now be described.

The biodegradable nonwoven fabric of the embodiment may be subjected to thermoforming to produce a molded body. The shape of the molded body is not particularly restricted and may be selected according to the purpose of use from among semicircular, circular columnar, elliptical, triangular and rectangular shapes, and in order to obtain a molded body of larger area (surface area) than the area of the nonwoven fabric before molding, a molding die having a larger area than the nonwoven fabric before and after molding may be selected as appropriate.

The method for molding the biodegradable nonwoven fabric of the embodiment is not particularly restricted so long as it includes a thermoforming step, and it may also include a preheating step before thermoforming, or a shape retention step to maintain the volume after thermoforming.

If a preheating step is included before thermoforming it will be possible to control the temperature of the nonwoven fabric immediately before molding and to adjust the property values of the nonwoven fabric, such as the storage modulus, to values suited for molding. The temperature range for the nonwoven fabric immediately prior to molding is preferably 30 to 70°C, more preferably 40 to 60°C and even more preferably 40 to 50°C. If the nonwoven fabric temperature immediately prior to molding is 30°C or higher, the nonwoven fabric will be sufficiently soft to result in a satisfactory follow property for the molding die, while being resistant to molding defects such as tearing or molding marks. If the temperature immediately prior to molding is 70°C or lower, the nonwoven fabric will be easier to mold without heat shrinkage.

When the biodegradable nonwoven fabric of the embodiment includes a polylactic acid-based polymer **(as** is **the case in the claimed invention),** the crystallization rate is exceedingly slow, causing shrinkage of the molded body to take place before crystallization of the nonwoven fabric due to residual stress when the nonwoven fabric is stretched during molding, and tending to result in a low-volume molded body. Therefore, in order to rapidly solidify the molded body and obtain a molded body with a large volume, a shape retention step may be included after molding to obtain an effect of retaining the shape.

The degree of molding of the biodegradable nonwoven fabric of the embodiment is represented by the molding index. The molding index is the value defined by dividing the surface area of the molded body by the area of the flat nonwoven fabric before molding which was used in the molded body (or the opening area, in the case of the container shape), as according to the following formula (1): 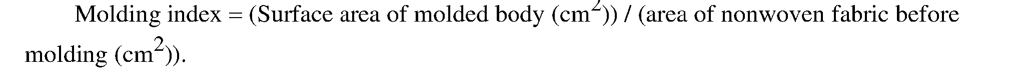 Molding index = (Surface area of molded body (cm2)) / (area of nonwoven fabric before molding (cm2)).

The molding index for molding of the biodegradable nonwoven fabric of the embodiment is preferably 1.1 or greater, more preferably 1.1 to 20, even more preferably 1.5 to 10 and most preferably 2.5 to 6. A larger molding index indicates greater stretching of the nonwoven fabric. A smaller molding index, on the other hand, indicates less stretching of the nonwoven fabric. The biodegradable nonwoven fabric of the embodiment can produce a molded article with a high ductility and a large molding index, because the nonwoven fabric has high ductility. A molding index of 20 or lower will allow molding without tearing, while a molding index of 1.1 or greater will provide a suitable size for filling the container with the contents.

The deformation speed is preferably 32 mm/sec or greater, more preferably 40 mm/sec or greater, even more preferably 50 mm/sec or greater and most preferably 105 mm/sec or greater, and preferably 320 mm/sec or lower and more preferably 140 mm/sec or lower, from the viewpoint of both improving dimensional stability of the molded body, and of productivity, while the biodegradable nonwoven fabric of the embodiment is being molded.

### EXAMPLES

The present invention will now be explained in greater detail by examples.

The measuring methods and evaluation methods used in the Examples and Comparative Examples will be explained first.

### (Evaluation of properties of biodegradable nonwoven fabric)

### (1) Basis weight (g/m²)

Nonwoven fabric samples were cut out to a total area of 1500 cm² (for example, three with 20 cm width × 25 cm length), according to JIS L-1913, and measured in terms of the mass per unit.

### (2) Bulk density (g/cm³)

A thickness gauge by Mitsutoyo Co. was used to measure the thickness (mm) of the nonwoven fabric sample under a 100 g load, and calculation was performed by the following formula: $Bulk density \left(g/{cm}^{3}\right) = Basis weight \left(g/{m}^{2}\right) / thickness \left(mm\right) / 1000 .$

### (3) Melting point (°C)

A DSC6000 differential scanning calorimeter by PerkinElmer Co. was used, raising the temperature above the melting point of the nonwoven fabric sample at 10°C/min. The apex of the peak corresponding to the melting peak in the resulting chart was used as the melting point. Multiple melting peaks may be observed depending on the proportion of the polylactic acid D-form, or blending with the secondary component resin, but the melting point referred to here is the apex of the low-temperature end peak of the peaks corresponding to the main component resin.

### (4) Crystallization onset temperature (°C)

When changes in the crystallinity of the nonwoven fabric sample are measured at 20 second intervals by time-resolved transmission Wide-Angle X-ray Scattering (WAXS), the crystallization onset temperature is recorded as the temperature at which the crystallinity increases by 3% or more with respect to the crystallinity at room temperature (for example, the temperature at which the crystallinity reaches 20.6%, if the crystallinity at room temperature was 20.0%). When the secondary component resin is blended and crystallization increase takes place in two stages, the temperature for the main component resin is used. The measuring apparatus and conditions used were as follows.
Apparatus: NANOPIX by Rigaku Corp.
X-ray wavelength: 0.154 nm
Optical system: Point collimation (1st: 1.40 mmφ, 2nd: Open, guard: 0.85 mmφ)
Detector: HyPix-6000 (two-dimensional semiconductor detector)
Camera length: 122.2 mm
Exposure time/measuring cycle: 10 seconds/20 seconds
Sample cell environment: Vacuum

Sample (nonwoven fabric sample) heating conditions: Heating in the furnace was started from room temperature, and the inner cell temperature was stabilized by warming for 5 minutes at 30°C, followed by temperature increase at 1°C/min (maximum temperature: 150°C).

As the measurement flow, the nonwoven fabric sample set in the cell was inserted into the furnace and temperature increase was initiated, beginning time resolution measurement immediately thereafter. For data processing, the scattering pattern I (2θ, φ) measured with a 2D detector was circularly averaged by the following formula: $I \left(2 θ\right) = \frac{1}{2 zP} {\int }_{0}^{2 z} \frac{I \left|2θ,ϕ\right|}{{cos}^{2} 2 θ} d ϕ$ {where θ: Bragg angle, φ: declination, P: polarization factor},
to obtain the one-dimensional scattering profile I (2θ).

The transmittance of the sample was not measured during the process in order to reliably ascertain changes in crystallinity occurring with temperature change while shortening the measuring cycle. Therefore, correction was not made for empty cell scattering. For the temperature history in the cell, measurement was carried out beforehand using an empty cell and thermocouple, and it was confirmed that the temperature change in the cell was not different from the set value in the furnace when temperature increase was at 1°C/min. The change in crystallinity of the biodegradable thermoplastic resin occurring with temperature change was calculated for each sample. The crystallinity X was calculated by peak separation of the one-dimensional scattering profile into crystalline peak and amorphous halo, and using the following formula: $X = \frac{{ΣI}_{d}}{{ΣI}_{d} + {ΣI}_{d}}$ {where I_{ci}: i^{th} crystalline peak area, Iₐᵢ: amorphous halo area}.

The peak separation may be done under any conditions which allow each of the peaks to be fully separated. In the case of PLA, the peak separation conditions for the amorphous peak were extension of the baseline to connect 2θ = 5° to 2θ = 28°, with a fitting range of 5°< 2θ < 28°. For the crystalline peak, the diffraction peak from PLA crystals observed with change in temperature was used. The two diffraction peaks from the (110)/(200) and (203) planes were both fitted to a Gaussian function, with the constraints being an amorphous peak location of 2θ = 16.9° and the full width at half maximum fixed at 9.5°.

### (5) Cold crystallization enthalpy heat ΔH (J/g)

A DSC6000 differential scanning calorimeter by PerkinElmer Co. was used, raising the temperature above the melting point of the nonwoven fabric sample at 10°C/min. The peak area for the exothermic peak from crystallization in the obtained chart was measured in the region of the change in heat quantity from the differential curve.

### (6) Dimensional change rate in MD direction at 80°C to 140°C by mechanical thermal analysis (%)

After removing 5 cm at both ends of the sample, it was cut to a width of 2 mm and a length of 25 mm so that the basis weight measured in (1) was ±10%, and a TMAQ400 by TA Instruments was used for measurement with a film/fiber clamp at the top of the clamp and an aluminum ball by TA Instruments at the bottom, using an initial load of 0.005 N, temperature increase to 30°C to 160°C at a rate of 10°C/min, and a grip length of 15 mm. The dimensional change rate (%) was determined by the following formula: $Dimensional change rate \left(%\right) = Dimensional change \left(μm\right) / \left\{grip length \left(mm\right)\times 1000\right\} \times 100$ at 80°C to 140°C. Measurement was conducted with N = 3, calculating the average value.

### (7) Biodegradability (industrial compost)

The nonwoven fabric sample was composted for a maximum of 12 weeks while measuring the degree of disintegration under defined composting conditions in pilot-scale test, according to ISO 16929 (JIS K 6952), and then passed through a 2 mm mesh sieve, evaluating the weight ratio remaining on the sieve with respect to the weight before passing through the sieve, on the following scale.

### [Evaluation scale]

VG: ≤5% remaining on sieve
G: >5% and ≤10% remaining on sieve
P: > 10% remaining on sieve.

### (8) Uniform moldability (R/Ave)

The nonwoven fabric sample was set in a molding machine having 10 rows of molding dies in the widthwise direction, and a cylindrical molding die at 120°C (4.4 cm diameter, 3.2 cm height) was used with the nonwoven fabric temperature adjusted to 50°C with hot air, for press molding with the time from contact of the die with the nonwoven fabric until reaching the prescribed depth set to 1.0 second followed by heat sealing of a PLA sheet as the cover material, to fabricate 100 molded bodies.

A 1 cm portion was punched out at the bottom of each obtained molded body, and the weight was measured.

The value of R/Ave is obtained by the following formula: $R \left(maximum-minimum of 100 sheets\right) / Ave \left(average value for weight of 100 sheets\right) .$

### (9) Moldability

Using two different cylindrical molded metals, one with a diameter of 4.4 cm and a height of 1.3 cm (13 mm) and the other with a diameter of 4.4 cm and a height of 3.2 cm(32 mm), the conditions of molded bodies after press molding by the same method as (7) above were observed and evaluated on the following scale. The molding index is the value defined by dividing the surface area of the molded body by the area of the flat nonwoven fabric before molding which was used in the molded body (or the opening area, in the case of the container shape), as according to the following formula: 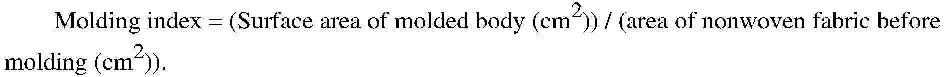 Molding index = (Surface area of molded body (cm2)) / (area of nonwoven fabric before molding (cm2)).

### (Evaluation scale)

The number of broken filaments on the surface was determined by summing the number of broken filaments on the surface of each molded body and calculating the average value for N = 10.
VG: Molded body with molding index of 1.9 or greater for a die height of 1.3 cm, or molding index of 3.4 or greater for a die height of 3.2 cm. Also, no more than one tear per 100 molded bodies, and no more than 3 broken filaments on the surface.
G: Molded body with molding index of 1.9 or greater for a die height of 1.3 cm, or molding index of 3.4 or greater for a die height of 3.2 cm. But 2 to 5 tears per 100 molded bodies, or 4 to 9 broken filaments on the surface.
F: Molded Body with molding index of 1.9 or greater for a die height of 1.3 cm, or molding index of 3.4 or greater for a die height of 3.2 cm. But with 10 or more problems such as marks, stretch marks and/or broken filaments on molded body surface.
P: No molded body obtained due to tearing.

### (10) Dimensional stability of molded body (volume change during boiling water immersion)

After immersion of the molded body fabricated by the method of (8) in boiling water for 1 minute and subsequent air-drying, the change in volume before and after boiling water immersion was determined and the average was calculated for N = 5. Assessment was made based on the rate of change in volume, on the following scale.
VG: Molded body volume change within ±5%
G: Molded body volume change within ±10%
F: Molded body volume change within ±20%
P: Molded body volume change greater than ±20%.

### [Example 1]

Polybutylene succinate (melting point: 110°C) was added at 10 wt% to polylactic acid with an MFR value of 15 g/10 min at 210°C (REVODE by Zhejiang Hisun), and the mixture was melted and kneaded with a single-screw extruder, and extruded by a spunbond method with a throughput of 0.9 g/min·hole, a spinning temperature of 230°C, a traction of 93 mN/m, and direction of the filament group toward the moving collecting surface, to prepare a biodegradable long fiber web (circular cross-section).

Next, a pair of embossing rolls having a concavoconvex pattern on one roll surface was used for thermocompression bonding under conditions with a contact bonding area ratio of 14%, a temperature of 55°C on both the upper and lower rolls, and a roll linear pressure of 40 N/mm, to obtain a biodegradable nonwoven fabric with a basis weight of 100 g/m².

### [Example 2]

A biodegradable nonwoven fabric was produced in the same manner as Example 1, except that the polylactic acid was changed to polylactic acid with an MFR value of 15 g/10 min at 210°C (Ingeo by Nature Works).

### [Examples 3 to 7]

Biodegradable nonwoven fabrics were produced in the same manner as Example 1, except that the throughput, embossing pressure and line speed were changed for the basis weights listed in Table 1.

### [Examples 8 to 12]

Biodegradable nonwoven fabrics were produced in the same manner as Example 5, except that the traction and contact bonding area ratio (embossing ratio) were changed.

### [Examples 13 to 15]

Biodegradable nonwoven fabrics were produced in the same manner as Example 5, except that the roll temperature (embossing temperature) during thermocompression bonding was 40, 70 and 85°C, respectively.

### [Examples 16 to 21]

Biodegradable nonwoven fabrics were produced in the same manner as Example 5, except that the addition of polybutylene succinate (PBS) was at 1, 3, 5, 15, 20 and 30 wt%, respectively.

### [Example 22]

A biodegradable nonwoven fabric was produced in the same manner as Example 5, except that the secondary component resin was polybutylene succinate adipate (PBSA).

### [Example 23]

A biodegradable nonwoven fabric was produced in the same manner as Example 5, except that the secondary component resin was polybutylene adipate terephthalate (PBAT).

### [Example 24] (not falling under the wording of the claims)

A biodegradable nonwoven fabric was produced in the same manner as Example 5, except that the secondary component resin was polycaprolactone (PCL).

### [Example 25] (not falling under the wording of the claims)

A biodegradable nonwoven fabric was produced in the same manner as Example 5, except that the secondary component resin was polyhydroxy butyrate hexanoate (PHBH).

### [Example 26] (not falling under the wording of the claims)

A biodegradable nonwoven fabric was produced in the same manner as Example 5, except that the secondary component resin was ethylene-ethyl acrylate copolymer (EEA).

### [Examples 27 to 30] (Example 27 does not fall under the wording of the claims)

Biodegradable nonwoven fabrics were produced in the same manner as Example 5, except that the thermocompression bonding area ratio (embossing ratio) during thermocompression bonding was 4, 8, 10 and 40%, respectively.

### [Examples 31 to 33]

Biodegradable long filament nonwoven fabrics were produced in the same manner as Example 5, except that the embossing pattern during thermocompression bonding was a pin, oval and flat pattern, respectively.

### [Examples 34 to 36] (not falling under the wording of the claims)

Biodegradable nonwoven fabrics were produced in the same manner as Example 5, except that the PBS addition was 0%, and the traction was changed.

### [Example 37] (not falling under the wording of the claims)

A biodegradable nonwoven fabric was produced in the same manner as Example 5, except that the main component resin was nylon 4 (PA4) with an MFR value of 25 g/10 min at 210°C, and the embossing temperature was changed to 63°C.

### [Example 38] (not falling under the wording of the claims)

A biodegradable nonwoven fabric was produced in the same manner as Example 5, except that the main component resin was polyglycolic acid (PGA) with an MFR value of 20 g/10 min at 210°C, the spinning temperature was changed to 260°C, and the embossing temperature was changed to 48°C.

### [Example 39] (not falling under the wording of the claims)

A biodegradable nonwoven fabric was produced in the same manner as Example 5, except that the polylactic acid and polybutylene succinate were melted and kneaded in separate extruders, and a sheath/core spinning nozzle was used to prepare polylactic acid as the core component and polybutylene succinate as the sheath component.

### [Examples 40 to 43]

In order to confirm the formability during rapid hot molding, the biodegradable nonwoven fabric of Example 5 was used to produce molded bodies at pressing temperatures of 120°C, 120°C, 140°C and 140°C and pressing times of 0.8 seconds, 0.6 seconds, 0.3 seconds and 0.1 seconds during molding, and each was evaluated.

### [Example 44] (not falling under the wording of the claims)

As staple fibers there was used a raw stock of polylactic acid containing 10 wt% polybutylene succinate, with a monofilament fiber diameter of 30 µm, which was passed through a carding machine to produce a nonwoven cloth web with a basis weight of 150 g/m². The produced web was then set on a 100 mesh wire net and a high-pressure liquid flow treatment device having 0.08 mm-diameter injection holes arranged at 0.7 mm hole spacings was used for high-pressure liquid flow treatment to integrate the web. The injection conditions for liquid flow were once at a water pressure of 60 kg/cm² and once at a water pressure of 120 kg/cm². From the opposite side, the conditions were once at a water pressure of 120 kg/cm². Drying treatment was then carried out using a hot air drier at 100°C to remove the excess moisture content from the obtained web, to obtain a biodegradable nonwoven fabric.

### [Example 45] (not falling under the wording of the claims)

The nonwoven fabric obtained in Example 44 was subjected to thermocompression bonding using a pair of embossing rolls having a concavoconvex pattern on one roll surface, under conditions with a contact bonding area ratio of 14%, a temperature of 55°C on both the upper and lower rolls, and a roll linear pressure of 40 N/mm, to obtain a biodegradable nonwoven fabric with a basis weight of 150 g/m².

### [Example 46] (not falling under the wording of the claims)

The nonwoven fabric obtained in Example 44 was needle punched with a punching density of 300/cm² for interlacing of the fiber web to obtain a biodegradable nonwoven fabric with a basis weight of 150 g/m².

### [Comparative Examples 1 and 2]

Biodegradable nonwoven fabrics were produced in the same manner as Example 1, except that the line speed was changed for a basis weight of 5,500 g/m² for each.

### [Comparative Examples 3 and 4]

Biodegradable long filament nonwoven fabrics were produced in the same manner as Example 5, except that the traction was 79,137 mN/m. In Comparative Example 3, the yarn clogged in the traction device making it impossible to accomplish spinning.

### [Comparative Example 5]

It was attempted to produce a biodegradable nonwoven fabric in the same manner as Example 5 except for using a roll temperature of 90°C during thermocompression bonding, but the nonwoven fabric underwent extreme contraction during thermocompression bonding, making it impossible to produce a nonwoven fabric.

### [Comparative Example 6]

It was attempted to produce a biodegradable nonwoven fabric in the same manner as Example 5 except for using a PBS addition of 35 wt% during production of the biodegradable long filament nonwoven fabric, but frequent yarn breakage made spinning impossible.

### [Comparative Example 7]

Polybutylene succinate (melting point: 110°C) was added at 10 wt% to polylactic acid with an MFR value of 15 g/10 min at 210°C (REVODE by Zhejiang Hisun), and the mixture was melted and kneaded with a single-screw extruder, and extruded by a spunbond method with a throughput of 0.9 g/min·hole, a spinning temperature of 230°C, a traction of 87/m, and direction of the filament group toward the moving collecting surface, to prepare a biodegradable long fiber web (circular cross-section).

Next, a pair of embossing rolls having a concavoconvex pattern on one roll surface was used for thermocompression bonding under conditions with a contact bonding area ratio of 14%, a temperature of 45°C on both the upper and lower rolls, and a roll linear pressure of 30 N/mm.

The temporarily bonded web was then stored at 30°C for 72 hours and then heat treated with a felt calender (drum diameter: 2,500 mm, temperature: 100°C, machining speed: 10 m/min), to obtain a biodegradable nonwoven fabric (basis weight: 150 g/m², fiber diameter: 30 µm).

### [Comparative Example 8]

A biodegradable nonwoven fabric was produced in the same manner as Comparative Example 7, except that the felt calender temperature was 135°C.

### [Comparative Example 9]

Polybutylene succinate with an MFR value of 30 g/10 min at 210°C was melted and kneaded with a single-screw extruder, and extruded by a spunbond method with a throughput of 0.9 g/min·hole, a spinning temperature of 220°C, a traction of 93 mN/m, and direction of the filament group toward the moving collecting surface, to prepare a biodegradable long fiber web (circular cross-section).

Next, a pair of embossing rolls having a concavoconvex pattern on one roll surface was used for thermocompression bonding under conditions with a contact bonding area ratio of 12%, a temperature of 90°C on both the upper and lower rolls, and a roll linear pressure of 40 N/mm, to produce a biodegradable nonwoven fabric.

The results for Examples 1 to 46 and Comparative Examples 1 to 9 are shown in Tables 1 to 5.

### [Table 1]

**Table 1**

| | | Units | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Production conditions | Single component or two components | - | Two | Two | Two | Two | Two | Two | Two | Two | Two | Two | Two |
| | Main component resin | - | PLA | PLA | PLA | PLA | PLA | PLA | PLA | PLA | PLA | PLA | PLA |
| | Secondary component resin | - | PBS | PBS | PBS | PBS | PBS | PBS | PBS | PBS | PBS | PBS | PBS |
| | Weight ratio of main component resin and secondary component resin | - | 90/10 | 90/10 | 90/10 | 90/10 | 90/10 | 90/10 | 90/10 | 90/10 | 90/10 | 90/10 | 90/10 |
| | Fiber structure | - | Sea-island | Sea-island | Sea-island | Sea-island | Sea-island | Sea-island | Sea-island | Sea-island | Sea-island | Sea-island | Sea-island |
| | Resin temperature | °C | 230 | 230 | 230 | 230 | 230 | 230 | 230 | 230 | 230 | 230 | 230 |
| | Traction | mN/m | 93 | 93 | 93 | 93 | 93 | 93 | 93 | 82 | 89 | 100 | 105 |
| | Emboss pattern | °C | Textured | Textured | Textured | Textured | Textured | Textured | Textured | Textured | Textured | Textured | Textured |
| | Embossing temperature | °C | 55 | 55 | 55 | 55 | 55 | 55 | 55 | 55 | 55 | 55 | 55 |
| | Embossing pressure | N/mm | 40 | 40 | 20 | 40 | 40 | 60 | 100 | 40 | 40 | 40 | 40 |
| | Embossing ratio | % | 12 | 12 | 12 | 12 | 12 | 12 | 12 | 12 | 12 | 12 | 20 |
| Nonwoven fabric properties | Basis weight | g/m² | 100 | 100 | 10 | 50 | 150 | 250 | 400 | 150 | 150 | 150 | 150 |
| | Thickness | mm | 0.31 | 0.33 | 0.16 | 0.23 | 0.39 | 0.56 | 0.79 | 0.36 | 0.47 | 0.47 | 0.47 |
| | Bulk density | g/cm³ | 0.33 | 0.31 | 0.06 | 0.22 | 0.38 | 0.45 | 0.51 | 0.42 | 0.32 | 0.32 | 0.32 |
| | Melting point Tm | °C | 166 | 166 | 166 | 166 | 166 | 166 | 166 | 166 | 166 | 166 | 166 |
| | Crystallization onset temperature | °C | 58.2 | 57.2 | 57.4 | 57.6 | 58.4 | 59.2 | 59.2 | 71.2 | 56.4 | 50.7 | 47.1 |
| | Melting point - crystallization onset temperature | °C | 108 | 109 | 109 | 108 | 108 | 107 | 107 | 95 | 110 | 115 | 119 |
| | Cold crystallization enthalpy heat | J/g | 14.5 | 14.1 | 14.5 | 14.5 | 14.5 | 14.5 | 14.5 | 19.2 | 12.3 | 9.3 | 7.7 |
| | Dimensional change rate | % | -11.3 | -10.8 | -11.0 | -11.3 | -12.4 | -11.5 | -12.0 | -20.1 | -8.4 | -5.0 | -4.5 |
| Hot molding conditions | Hot die temperature | °C | 120 | 120 | 120 | 120 | 120 | 120 | 120 | 120 | 120 | 120 | 120 |
| | Molding time | sec | 1.0 | 1.0 | 1.0 | 1.0 | 1.0 | 1.0 | 1.0 | 1.0 | 1.0 | 1.0 | 1.0 |
| | Deformation speed (13 mm) | mm/sec | 13 | 13 | 13 | 13 | 13 | 13 | 13 | 13 | 13 | 13 | 13 |
| | Deformation speed (32 mm) | mm/sec | 32 | 32 | 32 | 32 | 32 | 32 | 32 | 32 | 32 | 32 | 32 |
| Evaluation | Biodegradability | - | G | G | G | G | G | G | G | G | G | G | G |
| | Uniform moldability (32 mm equiv) | - | 0.26 | 0.24 | 0.28 | 0.27 | 0.21 | 0.36 | 0.37 | 0.56 | 0.38 | 0.39 | 0.43 |
| | Moldability (13 mm) | - | VG | VG | VG | VG | VG | VG | VG | G | VG | VG | VG |
| | Moldability (32 mm) | - | VG | VG | G | VG | VG | VG | VG | G | VG | VG | VG |
| | Molded body dim. stability (13 mm) | - | VG | VG | VG | VG | VG | VG | VG | G | VG | VG | VG |
| | Molded body dim. stability (32 mm) | - | VG | VG | VG | VG | VG | VG | VG | G | VG | VG | VG |

### [Table 2]

**Table 2**

| | | Units | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|
| Production conditions | Single component or two components | - | Two | Two | Two | Two | Two | Two | Two | Two | Two | Two | Two |
| | Main component resin | - | PLA | PLA | PLA | PLA | PLA | PLA | PLA | PLA | PLA | PLA | PLA |
| | Secondary component resin | - | PBS | PBS | PBS | PBS | PBS | PBS | PBS | PBS | PBS | PBS | PBSA |
| | Weight ratio of main component resin and secondary component resin | - | 90/10 | 90/10 | 90/10 | 90/10 | 99/1 | 95/3 | 95/5 | 85/15 | 80/20 | *70*/*30* | 90/10 |
| | Fiber structure | - | Sea-island | Sea-island | Sea-island | Sea-island | Sea-island | Sea-island | Sea-island | Sea-island | Sea-island | Sea-island | Sea-island |
| | Resin temperature | °C | 230 | 230 | 230 | 230 | 230 | 230 | 230 | 230 | 230 | 230 | 230 |
| | Traction | mN/m | 125 | 93 | 93 | 93 | 93 | 93 | 93 | 93 | 93 | 93 | 93 |
| | Emboss pattern | °C | Textured | Textured | Textured | Textured | Textured | Textured | Textured | Textured | Textured | Textured | Textured |
| | Embossing temperature | °C | 55 | 40 | 70 | 85 | 55 | 55 | 55 | 55 | 55 | 55 | 55 |
| | Embossing pressure | N/mm | 40 | 40 | 40 | 40 | 40 | 40 | 40 | 40 | 40 | 40 | 40 |
| | Embossing ratio | % | 30 | 12 | 12 | 12 | 12 | 12 | 12 | 12 | 12 | 12 | 12 |
| Nonwoven fabric properties | Basis weight | g/m² | 150 | 150 | 150 | 150 | 150 | 150 | 200 | 150 | 200 | 250 | *150* |
| | Thickness | mm | 0.56 | 0.36 | 0.39 | 0.39 | 0.36 | 0.39 | 0.47 | 0.39 | 0.47 | 0.56 | 0.36 |
| | Bulk density | g/cm³ | 0.27 | 0.42 | 0.38 | 0.38 | 0.42 | 0.38 | 0.42 | 0.38 | 0.42 | 0.45 | 0.42 |
| | Melting point Tm | °C | 166 | 166 | 166 | 166 | 166 | 166 | 166 | 166 | 166 | 166 | 166 |
| | Crystallization onset temperature | °C | 43.0 | 59.2 | 56.7 | 54.2 | 71.2 | 62.9 | 60.4 | 56.2 | 53.1 | 47.8 | 58.1 |
| | Melting point - crystallization onset temperature | °C | 123 | 107 | 109 | 112 | 95 | 103 | 106 | 110 | 113 | 118 | 108 |
| | Cold crystallization enthalpy heat | J/g | 3.3 | 15.2 | 10.4 | 8.6 | 10.2 | 11.0 | 12.1 | 13.2 | 13.8 | 14.2 | 14.3 |
| | Dimensional change rate | % | -4.0 | -10.8 | -8.1 | -5.2 | -7.8 | -8.2 | -8.3 | -13.1 | -11.2 | -11.8 | -13.2 |
| Hot molding conditions | Hot die temperature | °C | 120 | 120 | 120 | 120 | 120 | 120 | 120 | 120 | 120 | 120 | 120 |
| | Molding time | sec | 1.0 | 1.0 | 1.0 | 1.0 | 1.0 | 1.0 | 1.0 | 1.0 | 1.0 | 1.0 | 1.0 |
| | Deformation speed (13 mm) | mm/sec | 13 | 13 | 13 | 13 | 13 | 13 | 13 | 13 | 13 | 13 | 13 |
| | Deformation speed (32 mm) | mm/sec | 32 | 32 | 32 | 32 | 32 | 32 | 32 | 32 | 32 | 32 | 32 |
| Evaluation | Biodegradability | - | G | G | G | G | G | G | G | G | G | G | G |
| | Uniform moldability (32 mm equiv) | - | 0.68 | 0.28 | 0.52 | 0.76 | 0.56 | 0.43 | 0.34 | 0.27 | 0.26 | 0.26 | 0.28 |
| | Moldability (13 mm) | - | G | VG | VG | VG | G | VG | VG | VG | VG | VG | VG |
| | Moldability (32 mm) | - | G | VG | VG | VG | G | VG | VG | VG | VG | VG | VG |
| | Molded body dim. stability (13 mm) | - | G | G | VG | VG | G | VG | VG | VG | VG | VG | VG |
| | Molded body dim. stability (32 mm) | - | G | G | VG | VG | G | VG | VG | VG | VG | VG | VG |

### [Table 3]

**Table 3**

| | | Units | Example 23 | Example 24 * | Example 25 * | Example 26 | Example 27 * | Example 28 | Example 29 | Example 30 | Example 31 | Example 32 | Example 33 |
|---|---|---|---|---|---|---|---|---|---|---|---|---|---|
| Production conditions | Single component or two components | - | Two | Two | Two | Two | Two | Two | Two | Two | Two | Two | Two |
| | Main component resin | - | PLA | PLA | PLA | PLA | PLA | PLA | PLA | PLA | PLA | PLA | PLA |
| | Secondary component resin | - | PBAT | PCL | PHBH | EEA | PBS | PBS | PBS | PBS | PBS | PBS | PBS |
| | Weight ratio of main component resin and secondary component resin | - | 90/10 | 90/10 | 90/10 | 90/10 | 90/10 | 90/10 | 90/10 | 90/10 | 90/10 | 90/10 | 90/10 |
| | Fiber structure | - | Sea-island | Sea-island | Sea-island | Sea-island | Sea-island | Sea-island | Sea-island | Sea-island | Sea-island | Sea-island | Sea-island |
| | Resin temperature | °C | 230 | 230 | 230 | 230 | 230 | 230 | 230 | 230 | 230 | 230 | 230 |
| | Traction | mN/m | 93 | 93 | 93 | 93 | 93 | 93 | 93 | 93 | 93 | 93 | 93 |
| | Emboss pattern | °C | Textured | Textured | Textured | Textured | Textured | Textured | Textured | Textured | Pin | Oval | Flat |
| | Embossing temperature | °C | 55 | 55 | 55 | 55 | 55 | 55 | 55 | 55 | 55 | 55 | 65 |
| | Embossing pressure | N/mm | 40 | 40 | 40 | 40 | 40 | 40 | 40 | 40 | 40 | 40 | 60 |
| | Embossing ratio | % | 12 | 12 | 12 | 12 | 4 | 8 | 10 | 40 | 12 | 12 | 12 |
| Nonwoven fabric properties | Basis weight | g/m² | 150 | 200 | 200 | 250 | 150 | 150 | 150 | 150 | 150 | 150 | 150 |
| | Thickness | mm | 0.39 | 0.47 | 0.47 | 0.56 | 0.36 | 0.39 | 0.47 | 0.56 | 0.56 | 0.56 | 0.56 |
| | Bulk density | g/cm³ | 0.38 | 0.42 | 0.42 | 0.45 | 0.42 | 0.38 | 0.32 | 0.27 | 0.27 | 0.27 | 0.27 |
| | Melting point Tm | °C | 166 | 166 | 166 | 166 | 166 | 166 | 166 | 166 | 166 | 166 | 166 |
| | Crystallization onset temperature | °C | 52.4 | 62.1 | 64.3 | 66.6 | 58.1 | 58.8 | 57.6 | 59.3 | 58.1 | 57.5 | 58.5 |
| | Melting point - crystallization onset temperature | °C | 114 | 104 | 102 | 99 | 108 | 107 | 108 | 107 | 108 | 109 | 108 |
| | Cold crystallization enthalpy heat | J/g | 11.0 | 10.2 | 8.3 | 7.5 | 13.6 | 14.2 | 12.5 | 13.7 | 13.5 | 13.8 | 11.9 |
| | Dimensional change rate | % | -10.2 | -10.2 | -6.2 | -5.6 | -12.2 | -13.2 | -11.7 | -12.4 | -12.6 | -12.4 | -10.4 |
| Hot molding conditions | Hot die temperature | °C | 120 | 120 | 120 | 120 | 120 | 120 | 120 | 120 | 120 | 120 | 120 |
| | Molding time | sec | 1.0 | 1.0 | 1.0 | 1.0 | 1.0 | 1.0 | 1.0 | 1.0 | 1.0 | 1.0 | 1.0 |
| | Deformation speed (13 mm) | mm/sec | 13 | 13 | 13 | 13 | 13 | 13 | 13 | 13 | 13 | 13 | 13 |
| | Deformation speed (32 mm) | mm/sec | 32 | 32 | 32 | 32 | 32 | 32 | 32 | 32 | 32 | 32 | 32 |
| Evaluation | Biodegradability | - | G | G | G | G | G | G | G | G | G | G | G |
| | Uniform moldability (32 mm equiv) | - | 0.28 | 0.37 | 0.37 | 0.38 | 0.67 | 0.57 | 0.34 | 0.57 | 0.29 | 0.35 | 0.42 |
| | Moldability (13 mm) | - | VG | G | G | G | G | VG | VG | VG | VG | VG | VG |
| | Moldability (32 mm) | - | VG | G | G | G | G | VG | VG | VG | VG | VG | G |
| | Molded body dim. stability (13 mm) | - | VG | G | G | G | G | VG | VG | VG | VG | VG | VG |
| | Molded body dim. stability (32 mm) | - | VG | G | G | G | G | VG | VG | VG | VG | VG | VG |

| | | | | | | | | | | | | | |
|---|---|---|---|---|---|---|---|---|---|---|---|---|---|
| *** not falling under the wording of the claims** | | | | | | | | | | | | | |

### [Table 4]

**Table 4**

| | | Units | Example 34 * | Example 35* | Example 36* | Example 37 * | Example 38* | Example 39* | Example 40 | Example 41 | Example 42 | Example 43 | Example 44* |
|---|---|---|---|---|---|---|---|---|---|---|---|---|---|
| Production conditions | Single component or two components | - | Single | Single | Single | Single | Single | Single | Single | Two | Two | Two | Single |
| | Main component resin | - | PLA | PLA | PLA | PA4 | PGA | PLA | PLA | PLA | PLA | PLA | PLA |
| | Secondary component resin | - | - | - | - | PBS | PBS | PBS | PBS | PBS | PBS | PBS | PBS |
| | Weight ratio of main component resin and secondary component resin | - | 100/0 | 100/0 | 100/0 | 90/10 | 90/10 | 90/10 | 90/10 | 90/10 | 90/10 | 90/10 | 90/10 |
| | Fiber structure | - | - | - | - | - | - | - | **Sea-island** | Sea-island | Sea-island | Sea-island | - |
| | Resin temperature | °C | 230 | 230 | 230 | 230 | 260 | 230 | 230 | 230 | 230 | 230 | - |
| | Traction | mN/m | 87 | 93 | 105 | 87 | 87 | 105 | 105 | 93 | 93 | 93 | - |
| | Emboss pattern | °C | Textured | Textured | Textured | Textured | Textured | Textured | Textured | Textured | Textured | Textured | Textured |
| | Embossing temperature | °C | 52 | 52 | 52 | 63 | 48 | 52 | 52 | 55 | 55 | 55 | - |
| | Embossing pressure | N/mm | 40 | 40 | 40 | 40 | 40 | 40 | 40 | 40 | 40 | 40 | - |
| | Embossing ratio | % | 12 | 12 | 12 | 12 | 12 | 12 | 12 | 12 | 12 | 12 | - |
| Nonwoven fabric properties | Basis weight | g/m² | 150 | 150 | 150 | 150 | 150 | 150 | 150 | 150 | 150 | 150 | 150 |
| | Thickness | mm | 0.36 | 0.36 | 0.36 | 0.34 | 0.32 | 0.36 | 0.39 | 0.39 | 0.39 | 0.39 | 0.60 |
| | Bulk density | g/cm³ | 0.42 | 0.42 | 0.42 | 0.44 | 0.47 | 0.42 | 0.38 | 0.38 | 0.38 | 0.38 | 0.25 |
| | Melting point Tm | °C | 166 | 166 | 166 | 223 | 212 | 166 | 166 | 166 | 166 | 166 | 171 |
| | Crystallization onset temperature | °C | 74.8 | 73.5 | 72.5 | 64.3 | 82.0 | 72.5 | 58.4 | 58.4 | 58.4 | 58.4 | 72.5 |
| | Melting point - crystallization onset temperature | °C | 91 | 93 | 94 | 159 | 130 | 94 | 108 | 108 | 108 | 108 | 99 |
| | Cold crystallization enthalpy heat | J/g | 12.3 | 14.2 | 7.7 | 14.2 | 14.0 | 13.8 | 14.5 | 14.5 | 14.5 | 14.5 | 17.2 |
| | Dimensional change rate | % | -11.0 | -13.2 | -6.4 | -11.1 | -11.0 | -10.5 | -12.1 | -12.4 | -12.4 | -12.4 | -16.5 |
| Hot molding conditions | Hot die temperature | °C | 120 | 120 | 120 | 120 | 120 | 120 | 120 | 120 | 140 | 140 | 120 |
| | Molding time | sec | 1.0 | 1.0 | 1.0 | 1.0 | 1.0 | 1.0 | 0.8 | 0.6 | 0.3 | 0.1 | 1.0 |
| | Deformation speed (13 mm) | mm/sec | 13 | 13 | 13 | 13 | 13 | 13 | 16 | 22 | 43 | 130 | 13 |
| | Deformation speed (32 mm) | mm/sec | 32 | 32 | 32 | 32 | 32 | 32 | 40 | 53 | 107 | 320 | 32 |
| Evaluation | Biodegradability | - | G | G | G | G | G | G | G | G | G | G | G |
| | Uniform moldability (32 mm equiv) | - | 0.32 | 0.31 | 0.34 | 0.33 | 0.37 | 0.34 | 0.26 | 0.28 | 0.23 | 0.25 | 0.34 |
| | Moldability (13 mm) | - | G | G | G | G | G | G | VG | VG | VG | VG | G |
| | Moldability (32 mm) | - | G | G | G | G | G | G | VG | VG | VG | VG | G |
| | Molded body dim. stability (13 mm) | - | G | G | G | G | G | G | VG | VG | VG | VG | VG |
| | Molded body dim. stability (32 mm) | - | G | G | G | G | G | G | VG | VG | VG | G | VG |

| | | | | | | | | | | | | | |
|---|---|---|---|---|---|---|---|---|---|---|---|---|---|
| *** not falling under the wording of the claims** | | | | | | | | | | | | | |

### [Table 5]

**Table 5**

| | | Units | Example 45* | Example 46* | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|---|---|---|
| Production conditions | Single component or two components | - | Single | Single | Two | Two | Two | Two | Two | Two | Two | Two | Single |
| | Main component resin | - | PLA | PLA | PLA | PLA | PLA | PLA | PLA | PLA | PLA | PLA | PBS |
| | Secondary component resin | - | PBS | PBS | PBS | PBS | PBS | PBS | PBS | PBS | PBS | PBS | - |
| | Weight ratio of main component resin and secondary component resin | - | 90/10 | 90/10 | 90/10 | 90/10 | 90/10 | 90/10 | 90/10 | 65/35 | 90/10 | 90/10 | 100/0 |
| | Fiber structure | - | - | - | Sea-island | Sea-island | Sea-island | Sea-island | Sea-island | Sea-island | Sea-island | Sea-island | - |
| | Resin temperature | °C | - | - | 230 | 230 | 230 | 230 | 230 | 230 | 230 | 230 | 170 |
| | Traction | mN/m | - | - | 93 | 93 | 79 | 137 | 93 | 93 | 87 | 87 | 93 |
| | Emboss pattern | °C | Textured | Textured | Textured | Textured | Textured | Textured | Textured | Textured | Textured | Textured | Textured |
| | Embossing temperature | °C | 55 | - | 52 | 52 | 52 | 52 | 90 | 52 | 45 | 45 | 90 |
| | Embossing pressure | N/mm | 40 | - | 40 | 40 | 40 | 40 | 40 | 40 | 30 | 30 | 40 |
| | Embossing ratio | % | 12 | - | 12 | 12 | 12 | 12 | 12 | 12 | 14 | 14 | 12 |
| Nonwoven fabric properties | Basis weight | g/m² | 150 | 150 | 5 | 500 | - | 150 | - | - | 150 | 150 | 150 |
| | Thickness | mm | 0.36 | 0.48 | 0.15 | 0.95 | - | 0.39 | - | - | 0.36 | 0.34 | 0.32 |
| | Bulk density | g/cm³ | 0.42 | 0.31 | 0.03 | 0.53 | - | 0.38 | - | - | 0.42 | 0.45 | 0.47 |
| | Melting point Tm | °C | 171 | 171 | 166 | 166 | - | 166 | - | - | 166 | 166 | 110 |
| | Crystallization onset temperature | °C | 72.5 | 72.5 | 58.2 | 58.2 | - | 40.5 | - | - | - | - | - |
| | Melting point - crystallization onset temperature | °C | 99 | 99 | 108 | 108 | - | 126 | - | - | - | - | - |
| | Cold crystallization enthalpy heat | J/g | 13.8 | 17.3 | 13.7 | 14.3 | - | 0.8 | - | - | - (loss) | - (loss) | - (loss) |
| | Dimensional change rate | % | -11.2 | -17.2 | -11.2 | -10.8 | - | -4.0 | - | - | -1.3 | -0.2 | -1.5 |
| Hot molding conditions | Hot die temperature | °C | 120 | 120 | 120 | 120 | - | 120 | - | - | 120 | 120 | 120 |
| | Molding time | sec | 1.0 | 1.0 | 1.0 | 1.0 | - | 1.0 | - | - | 1.0 | 1.0 | 1.0 |
| | Deformation speed (13 mm) | mm/sec | 13 | 13 | 13 | 13 | - | 13 | - | - | 13 | 13 | 13 |
| | Deformation speed (32 mm) | mm/sec | 32 | 32 | 32 | 32 | - | 32 | - | - | 32 | 32 | 32 |
| Evaluation | Biodegradability | - | G | G | G | G | - | G | - | - | G | G | G |
| | Uniform moldability (32 mm equiv) | - | 0.34 | 0.34 | 0.26 | 0.49 | - | 1.21 | - | - | 0.67 | 0.69 | - |
| | Moldability (13 mm) | - | VG | VG | P | G | - | F | - | - | VG | VG | P |
| | Moldability (32 mm) | - | VG | G | P | G | - | P | - | - | VG | VG | P |
| | Molded body dim. stability (13 mm) | - | VG | VG | - | F | - | P | - | - | F | F | - |
| | Molded body dim. stability (32 mm) | - | VG | VG | - | F | - | P | - | - | F | F | - |

| | | | | | | | | | | | | | |
|---|---|---|---|---|---|---|---|---|---|---|---|---|---|
| *** not falling under the wording of the claims** | | | | | | | | | | | | | |

### INDUSTRIAL APPLICABILITY

The biodegradable nonwoven fabric of the invention is biodegradable while exhibiting excellent molding homogeneity and moldability, and it can therefore be suitably used in a wide variety of fields including containers for household materials or containers for industrial materials, vehicle interior and exterior materials, soundproof materials, sound-absorbing materials, part transport trays, fruit and vegetable trays, food containers, seedling pods and filters. The biodegradable nonwoven fabric of the invention also has high ductility and can be used to form containers with complex shapes. Since heat shrinkage of its molded articles can also be inhibited, it can be suitably used in fields that require high design properties for containers.

## Claims

1. A biodegradable spunbond nonwoven fabric composed of fibers that include a biodegradable thermoplastic resin,
wherein
(a) the basis weight is 10 g/m² to 450 g/m²,
(b) the difference between the melting point and the crystallization onset temperature of the nonwoven fabric, both determined as described in the description, is from at least 91°C to 159 °C or less,
(c) the cold crystallization enthalpy heat ΔH of the nonwoven fabric, determined as described in the description, is from 1.0 J/g or greater to 20.0 J/g or lower,
(d) the fibers that include the biodegradable thermoplastic resin comprise 70 wt% or more and 99.5 wt% or less of the biodegradable thermoplastic resin as the main component and comprise 0.5 wt% or more to 30 wt% or less of a thermoplastic resin different from the main component, as a secondary component,
wherein the biodegradable thermoplastic resin is a polylactic acid-based polymer, and
wherein the secondary component includes any one of polybutylene succinate, polybutylene adipate terephthalate or polybutylene succinate adipate,
(e) the fibers that include the biodegradable thermoplastic resin are sea-island fibers wherein the main component constitutes the sea portions and the secondary component constitutes the island portions, and
(f) the contact bonding area ratio of the nonwoven fabric is 8% or greater.

2. A method for producing a molded body, which includes a step of hot molding a biodegradable nonwoven fabric according to claim 1.

3. The method according to claim 2, wherein the deformation speed in hot molding is 32 mm/sec to 320 mm/sec.

4. The method according to claim 2, wherein the deformation speed in hot molding is 105 mm/sec to 140 mm/sec.

## Patentansprüche

1. Biologisch abbaubares Spinnvlies, das aus Fasern besteht, die ein biologisch abbaubares thermoplastisches Harz umfassen,
wobei
(a) das Flächengewicht 10 g/m² bis 450 g/m² beträgt,
(b) die Differenz zwischen dem Schmelzpunkt und der Kristallisationsanfangs-Temperatur des Vliesstoffs, die beide so bestimmt werden, wie es in der Beschreibung beschrieben ist, wenigstens 91°C bis 159°C oder weniger beträgt,
(c) die Kaltkristallisationsenthalpie ΔH des Vliesstoffs, die so bestimmt werden, wie es in der Beschreibung beschrieben ist, 1,0 J/g oder mehr bis 20,0 J/g oder weniger beträgt,
(d) die Fasern, die das biologisch abbaubare thermoplastische Harz umfassen, 70 Gew.-% oder mehr und 99,5 Gew.-% oder weniger des biologisch abbaubaren thermoplastischen Harzes als Hauptkomponente umfassen und 0,5 Gew.-% oder mehr bis 30 Gew.-% oder weniger eines von der Hauptkomponente verschiedenen thermoplastischen Harzes als sekundäre Komponente umfassen,
wobei das biologisch abbaubare thermoplastische Harz ein Polymer auf Polymilchsäurebasis ist und
wobei die sekundäre Komponente eines aus Polybutylensuccinat, Polybutylenadipatterephthalat oder Polybutylensuccinatadipat umfasst,
(e) die Fasern, die das biologisch abbaubare thermoplastische Harz umfassen, Sea-Island-Fasern sind, wobei die Hauptkomponente die Matrixteile bildet und die sekundäre Komponente die Inselteile bildet, und
(f) der Kontaktflächenanteil des Vliesstoffs 8% oder mehr beträgt.

2. Verfahren zur Herstellung eines Formteils, das einen Schritt des Warmformens eines biologisch abbaubaren Vliesstoffs gemäß Anspruch 1 umfasst.

3. Verfahren gemäß Anspruch 2, wobei die Verformungsgeschwindigkeit beim Warmformen 32 mm/s bis 320 mm/s beträgt.

4. Verfahren gemäß Anspruch 2, wobei die Verformungsgeschwindigkeit beim Warmformen 105 mm/s bis 140 mm/s beträgt.

## Revendications

1. Non-tissé filé-lié biodégradable composé de fibres qui incluent une résine thermoplastique biodégradable,
dans lequel
(a) la masse surfacique est de 10 g/m² à 450 g/m²,
(b) la différence entre le point de fusion et la température de début de cristallisation du non-tissé, tous deux déterminés comme décrit dans la description, est d'au moins 91 °C à 159 °C ou moins,
(c) l'enthalpie de cristallisation à froid ΔH du non-tissé, déterminée comme décrit dans la description, est de 1,0 J/g ou plus à 20,0 J/g ou moins,
(d) les fibres qui incluent la résine thermoplastique biodégradable comprennent 70 % en poids ou plus et 99,5 % en poids ou moins de la résine thermoplastique biodégradable en tant que composant principal et comprennent 0,5 % en poids ou plus à 30 % en poids ou moins d'une résine thermoplastique différente du composant principal, en tant que composant secondaire,
dans lequel la résine thermoplastique biodégradable est un polymère à base d'acide polylactique, et
dans lequel le composant secondaire inclut l'un quelconque de polybutylène succinate, polybutylène adipate téréphtalate ou polybutylène succinate adipate,
(e) les fibres qui incluent la résine thermoplastique biodégradable sont des fibres de type mer-île dans lesquelles le composant principal constitue les parties mer et le composant secondaire constitue les parties île, et
(f) le taux de surface de liaison par contact du non-tissé est de 8 % ou plus.

2. Procédé de production d'un corps moulé, qui inclut une étape de moulage à chaud d'un non-tissé biodégradable selon la revendication 1.

3. Procédé selon la revendication 2, dans lequel la vitesse de déformation dans le moulage à chaud est de 32 mm/sec à 320 mm/sec.

4. Procédé selon la revendication 2, dans lequel la vitesse de déformation dans le moulage à chaud est de 105 mm/sec à 140 mm/sec.
